# EUROPEAN PATENT SPECIFICATION

(11) **EP 1 211 294 B1**
(45) Date of publication and mention of the grant of the patent: **13.08.2008**
(21) Application number: 01127884.3
(22) Date of filing: 23.11.2001
(51) Int. Cl.: C09B 23/06, C09B 23/08, G01N 33/533

(54) **Improved process and method for the preparation of asymmetric monofunctionalised indocyanine labelling reagents and obtained compounds**
Verbessertes Verfahren und Methode zur Herstellung von asymmetrischen monofunktionalisierten Indocyaninmarkern sowie erhaltene Verbindungen
Procédé et méthode améliorés pour la préparation de marqueurs indocyanines asymétriques monofonctionnalisés et composés ainsi obtenus

(30) Priority: 28.11.2000 EP 00126019
(43) Date of publication of application: 05.06.2002
(73) Proprietor: Visen Medical, Inc., Woburn, MA 01801 (US)
(72) Inventor: Caputo, Giuseppe, 10125 Torino (IT); Della Ciana, Leopoldo, 10015 Ivrea (Torino) (IT)
(74) Representative: Kirkham, Nicholas Andrew

(56) References cited:
- WO-A-97/13810
- DE-A- 19 921 234
- MUJUMDAR R B ET AL: "CYANINE DYE LABELING REAGENTS: SULFOINDOCYANINE SUCCINIMIDYL ESTERS" BIOCONJUGATE CHEMISTRY,US,AMERICAN CHEMICAL SOCIETY, WASHINGTON, vol. 4, no. 2, 1 March 1993 (1993-03-01), pages 105-111, XP000654181 ISSN: 1043-1802
- MUJUMDAR R B ET AL: "CYANINE DYE LABELING REAGENTS CONTAINING ISOTHIOCYANATE GROUPS" CYTOMETRY,US,ALAN LISS, NEW YORK, vol. 10, no. 1, 1989, pages 11-19, XP000034880 ISSN: 0196-4763
- MANK A J G ET AL: "VISIBLE DIODE LASER.INDUCED FLUORESCENCE DETECTION IN LIQUID CHROMATOGRAPHY AFTER PRECOLUMN DERIVATIZATION OF AMINES" ANALYTICAL CHEMISTRY,US,AMERICAN CHEMICAL SOCIETY. COLUMBUS, vol. 67, 1995, pages 1742-1748, XP002012845 ISSN: 0003-2700

## Description

Indocyanine dyes conform to the generalised formula: 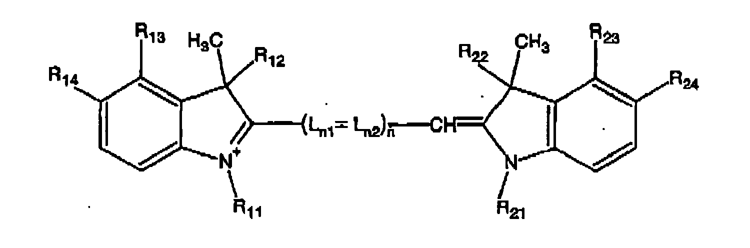 where R₁₁, R₁₂, R₁₃, R₁₄, R₂₁, R₂₂, R₂₃ and R₂₄ are either hydrogens or substituents; the substituent couples R₁₃, R₁₄ and/or R₂₃, R₂₄ can form a condensed benzene ring, in turn bearing substituents; n = 1-3; Lₙ₁, Lₙ₂ are either methines (C-H) or substituted methines (C-R).

Comprehensive reviews regarding indocyanine dyes have been written by Frances M. Hamer, "The Chemistry of Heterocyclic Compounds", vol. 18, "The Cyanine Dyes and Related Compounds," Weissberger Ed., Wiley Interscience, New York, (1964); D. M. Sturmer, "The Chemistry of Heterocyclic Compounds", "Special Topics in Heterocyclic Chemistry", chapter VIII, "Synthesis and Properties of Cyanine and Related Dyes", Weissberger Ed., Wiley, New York, (1977); "The Kirk-Othmer Encyclopaedia of Chemical Technology" vol. 7, p.782, "Cyanine Dyes", Wiley, New-York, (1993).

DE19921234 discloses cyanine dyes having sulfoaryl and N-sulfoalkyl groups and a reactive group for binding to carrier substances.

For many years, indocyanine dyes have been very useful as sensitisers in photography, especially in the red and near infrared regions of the spectrum. However, in more recent years, there has been an upsurge of new uses of these dyes in innovative technological areas, such as laser and electro-optic applications, optical recording media, medical, biological and diagnostic. These new applications of indocyanine dyes place high demands on the degree of purity required, and the reproducibility of synthetic methods and purification steps is very important. These requirements are especially stringent for dyes designed to improve detection of ribonucleic acid (RNA), deoxyribonucleic acid (DNA) and of antigens in immunoassays. In these fields, the trend toward an increasing miniaturisation is accompanied by an increasing demand on sensitivity of the reporter molecules or labels. One way to increase the sensitivity of conventional fluorescence method is to use laser sources for the excitation. However, traditional fluorescent labels based on fluoresceins or rhodamines required expensive and/or bulky lasers. Moreover, their fluorescence occurs in the blue-green to green regions of the visible spectrum, where interference from the sample matrix is more likely to occur. Indocyanine dyes do not suffer from these limitations. They can be efficiently excited by means of small, inexpensive solid state devices such as laser diodes or light emitting diodes, with extinction coefficients often several times higher than fluoresceins and rhodamines; they emit in the red and near-infrared regions of the spectrum, where non-specific fluorescence from the sample is low or lacking; another sources, Raman noise, becomes smaller with the inverse fourth power of wavelength.

To be useful as a label, a dye has to be provided with a suitable side chain containing a functional group. While the main part of the dye structure is generally known from previous applications, the introduction of a functional group into the structure for the purpose of conjugation, or binding to another molecule, represents the innovative step in the inventions concerning the use of the dye as a labelling reagent. In general, only one such functionalised side arm is preferable, in order to avoid cross-linking or purification problems. With a few exceptions, limited to heptamethine dyes, the standard approach in the design of indocyanine labelling reagents has been to attach the functionalised side arm to one of the heterocyclic nuclei of the dye:

HET₁―HET₂―Z

See, for instance: J.S. Lindsey, P.A. Brown, and D.A. Siesel, "Visible Light-Harvesting in Covalently-Linked Porphyrin-Cyanine Dyes", Tetrahedron, 45, 4845, (1989); R.B. Mujumdar, L.A. Ernst, Swati R. Mujumdar, C.J. Lewis, and A.S. Waggoner, "Cyanine Dye Labelling Reagents: Sulfoindocyanine Succinimidyl Esters", Bioconjugate Chemistry, 4, 105, (1993); G. Mank, H.T.C. van der Laan, H.Lingeman, Cees Goojer, U.A. Th. Brinkman, and N.H. Velthorst, "Visible Diode Laser-Induced Fluorescence Detection in Liquid Chromatography after Pre-column Derivatization of Amines", Anal. Chem., 67, 1742, (1995).

The general synthetic strategy necessary to prepare these labelling reagents is as follows. First, a quaternised nitrogen heterocycle HET₁ is prepared. Then, this heterocyclic base is reacted with an electrophilic reagent such as PhNH-(CH=CH)ₙ-CH=NHPh·HCl or RO-(CH=CH)ₙ-CH(OR)₂, where Ph is a phenyl ring and R a methyl or ethyl group, to obtain a so-called hemicyanine dye, HET₁-(CH=CH)ₙNHPh / HET₁-(CH=CH)ₙNAcPh, where Ac is the acetyl radical or HET₁-(CH=CH)ₙ-OR. These intermediates are then reacted with a different quaternary nitrogen heterocycle, HET₂. The functionalised side arm can be attached either to the first or to the second quaternised nitrogen heterocycle. The final result is an asymmetric polymethine labelling reagent, HET₁-(CH=CH)ₙ -HET₂-Z.

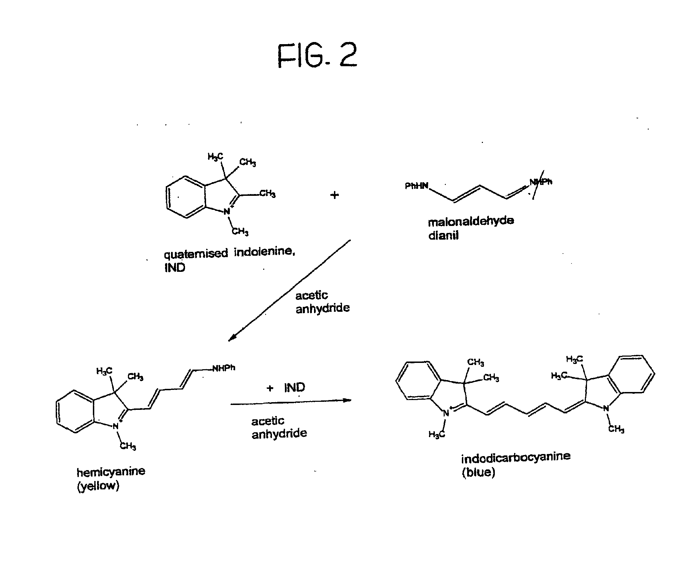

Unfortunately, the hemicyanine intermediates are notoriously difficult to obtain in good yields and/or in a pure form. For example, the condensation of N-methyl-2,3,3-trimethyl[3H]indolium iodide with malonaldehyde dianil monochloride in acetic anhydride is said (Piggott and Rodd, GB 355,693/1930) to give rise to a green intermediate, indicating a strong contamination of the desired, yellow hemicyanine intermediate (yellow) with symmetric, blue indocyanine dye, Figure 2. Moreover, when F. M. Hamer, in "Some Unsymmetrical Pentamethincyanine Dyes and their Tetramethin Intermediates" J. Chem. Soc, 22, 32, (1949) tried to prepare a pure sample of the same hemicyanine intermediate, it was obtained in an 8% yield, after a lengthy and wasteful procedure based on multiple extractions and precipitations. More recently, R.B. Mujumdar, L.A. Ernst, Swati R. Mujumdar, C.J. Lewis, and A.S. Waggoner, in "Cyanine Dye Labelling Reagents: Sulfoindocyanine Succinimidyl Esters", Bioconjugate Chemistry, 4, 105, (1993) described the synthesis of hemicyanine intermediates for the preparation of sulfoindocyanine dyes active esters, useful as labelling reagents. One intermediate was obtained by condensing 1-ethyl-2,3,3-trimethyl [3H]indolium-5-sulfonate with N,N'-diphenylformamidine in acetic acid for four hours. While the reported yield of the crude compound was 30%, the carboindocyanine dyes prepared from it were obtained only in 25% and 5% yields, after extensive purification by reverse phase HPLC chromatography. Similarly, the condensation of l-ethyl-2,3,3-trimethyl[3H]indolium-5-sulfonate with malonaldehyde dianil hydrochloride in a mixture of acetic acid and acetic anhydride at reflux for four hours was said to produce the corresponding hemicyanine intermediate in an unreported yield. Again, the yields of the dicarboindocyanine dyes obtained from these intermediates were very low (5%). In fact, when Mank (Anal. Chem., 67, 1744) tried to synthesise the same dicarbocyanine label described in the previous reference he obtained a total yield of 18% of dicarbocyanines, from which the desired product was difficult to separate. He then devised an alternative approach based on 1,3,3-trimethoxypropene. Unfortunately, this chemical is no longer available commercially. Similar difficulties were encountered by us when trying to repeat the syntheses indicated above.

For these reasons it became necessary to investigate more carefully the technique employed to prepare the required hemicyanine intermediates and the properties of the latter. We thus discovered two main sources of trouble. The first was the formation of symmetrical indocyanine dye in variable and often erratic amounts in the condensation step. The other complication arose from the reversibility of this reaction. For example, when a pure sample of hemicyanine intermediate was exposed to the same conditions used for the formation of the asymmetric cyanine dye, namely to a base such as acetate, pyridine or triethylamine, formation of symmetric dye was observed. This phenomenon was more evident with the more reactive quaternised indolenines.

The steps we took to deal with these problems are described in details in the next section.

### DETAILED DESCRIPTION OF THE INVENTION

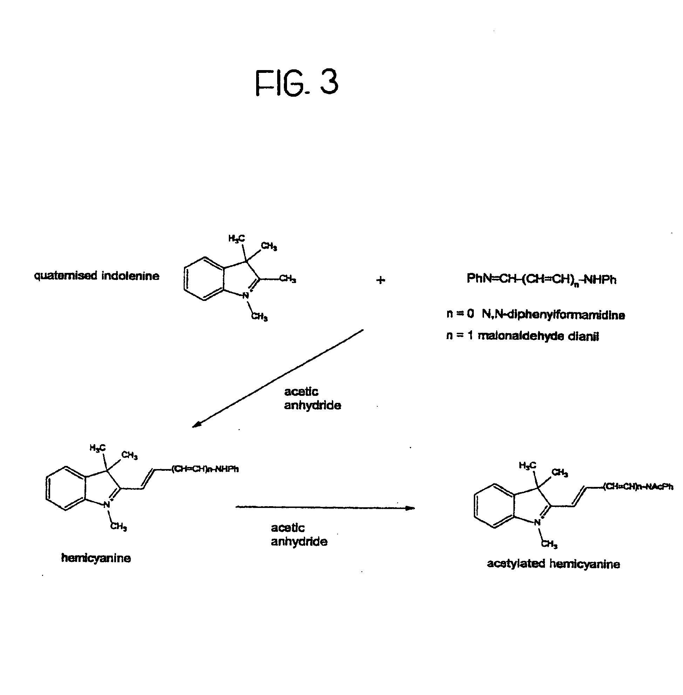

When a quaternised indolenine is reacted with N,N'-diphenyl-formamidine in acetic acid, or acetic acid anhydride, or a mixture of these two solvents a hemicyanine is formed. This hemicyanine can be present in two forms, one in which the terminal anil group (NH-phenyl) is free and the other one where it is acetylated, NAc-phenyl, Figure 3. The two forms have different UV-visible absorptions and can be easily differentiated. Even when acetic anhydride alone is used, some non acetylated hemicyanine is often formed. Similar observations apply to the reaction of quaternised indolenine with the vinylogs of N,N-diphenylformamidine, e.g. malonaldehyde dianils. Our initial aim in the optimisation of this reaction was the obtainment of only one of the two forms of hemicyanine, the acetylated form. We thought the addition of a stronger acetylating agent, such as acetyl chloride to the acetic anhydride solvent would be more effective in achieving the complete acetylation of the hemicyanine. Surprisingly, not only our assumption turned out correct, but, more importantly, the addition of acetyl chloride completely inhibited the formation of symmetric cyanine dye. Therefore, one aspect of our invention lies in the addition of variable amounts of acetyl chloride to the acetic anhydride solvent used for the preparation of hemicyanine. The amount of acetyl chloride can vary from 0.5% to 50%, with a preferred range from 1% to 20%.

In a further aspect of our invention, we developed a purification method of the intermediate hemicyanine by means of continuous extraction of the crude product with a suitable solvent. Such solvent should extract any unreacted N,N-diphenylformamidine or malonaldehyde dianil or substituted derivatives thereof, without contemporaneous dissolution of the hemicyanine. Preferred solvents are ethyl acetate, methylene chloride, chloroform, 1,1,1-trichloroethane and other chlorinated solvents. Methods for continuous extraction include Soxhlet extraction or similar liquid-solid extractions, or liquid-liquid extractor; the latter can be in either of two forms, namely, the extracting liquid can be either lighter or heavier than the liquid containing the hemicyanine to be purified, either in solution or in a suspension. When the hemicyanine is present in a suspension, the density of the hemicyanine should be lower than the extracting solvent.

In yet another aspect of our invention, we designed a general strategy for the synthesis of asymmetric cyanine dyes to be used as labelling reagents. As we have seen previously, one of the complications present in these syntheses is the reversibility of the intermediate hemicyanines, especially when the second quaternised indolenine is less reactive than the first. In this case, large amount of symmetric hemicyanine, HET₁―HET₁ form, contaminating the desired HET₁―HET₂ product. The separation of the two products is often difficult to achieve, especially when the indolenine nuclei are similar. Of the different indolenines employed in these syntheses, the more reactive are those not bearing electron withdrawing groups in the benzene ring and with simple alkyl chains attached to the quaternary nitrogen. A decrease in reactivity is observed when these cyanines bear carboxylalkyl or sulfonatoalkyl chains or electron withdrawing groups in the benzene ring, such as sulfonic or carboxylic groups. A similar decrease in reactivity is also observed with cyanines bearing additional condensed benzene rings. The least reactive cyanines are those with additional condensed benzene rings bearing sulfonic groups and quaternised with sulfoalkyl or carboxylalkyl groups. In view of this behaviour we adopted the following strategy. First, we synthesised the hemicyanine with the less reactive indolenine according to the improved methods illustrated previously. These intermediate where then purified, when possible, by extraction of the impurities in a solid-liquid or liquid-liquid extractor. The purified hemicyanine intermediate was then reacted with the more reactive indolenine. Thus the reaction leading to the desired cyanine product was relatively fast compared to the dissociation of the hemicyanine back to its starting materials. The products thus obtained were much more pure and their yields also increased significantly. Especially useful was found the combination of a hemicyanine made from a benzoindolenine bearing sulfonic groups and quaternised with a carboxylalkyl chain and an indolenine with sulfonic groups, but quaternised only with simple alkyl chains. This scheme is the opposite of those utilised according to known methods, especially those described in the above mentioned references, where the indocyanine intermediate is always synthesised from the more reactive indolenine, while the less reactive indolenine was added in the cyanine forming step.

In a further extension of this strategy, a more reactive malonaldehyde dianil reagent, 2-chloromalonaldehyde dianil hydrochloride was employed, especially when the indolenine to be reacted with it had very reduced reactivity.

The subject matter of the invention is defined by the appended claims.

In the claims, the term "substituted phenyl" is meant to include preferably phenyl with one or more substituents selected from alkyl and halogen atoms. Alkyl in the claims is preferably C₁-C₆ alkyl.

The following examples are simply meant to further illustrate specific applications of the present and are not intended to be construed as defining or limiting the scope of the invention.

In the drawings:

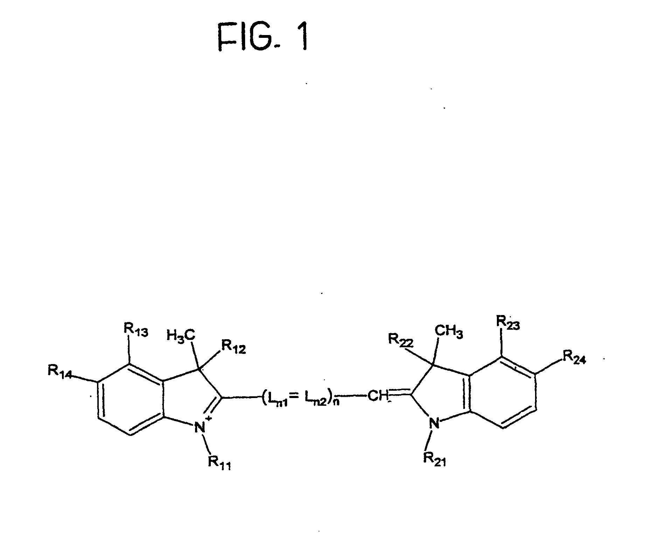

- fig.1 is a general formula of indocyanine dyes;
- fig.2 is a scheme of the prior art process for preparing indocyanines;
- fig.3 is a scheme of the prior art process for preparing hemiindocyanines; and

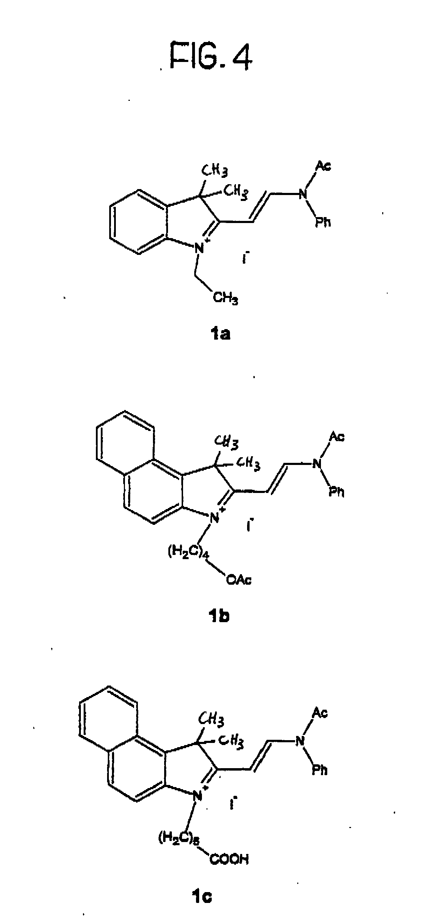

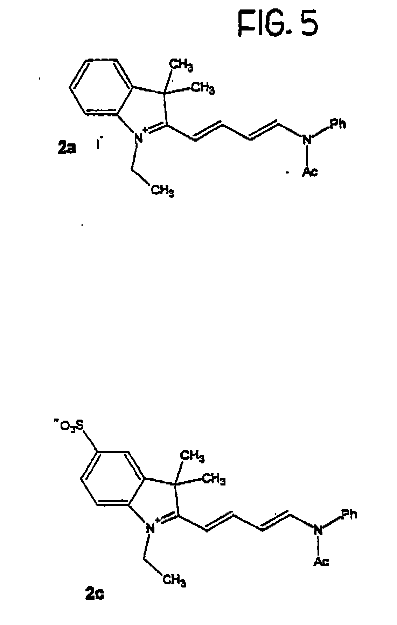

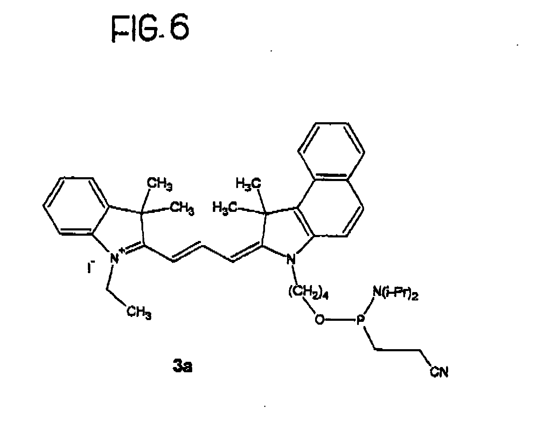

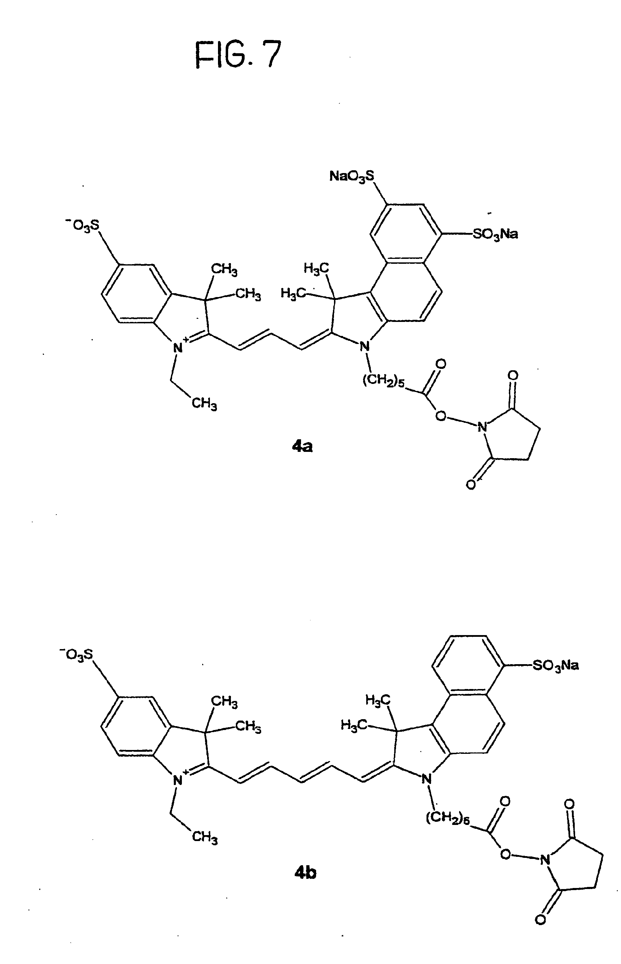

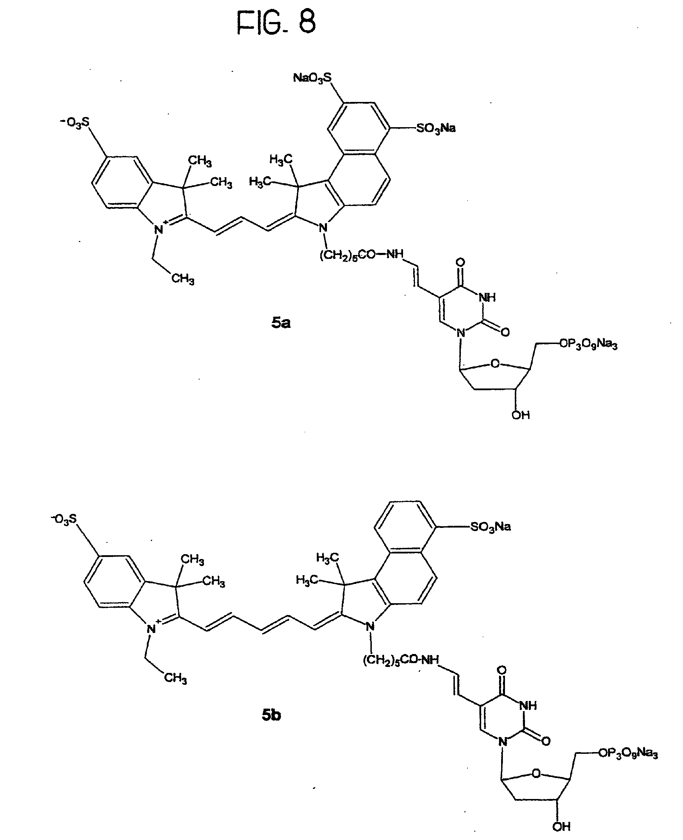

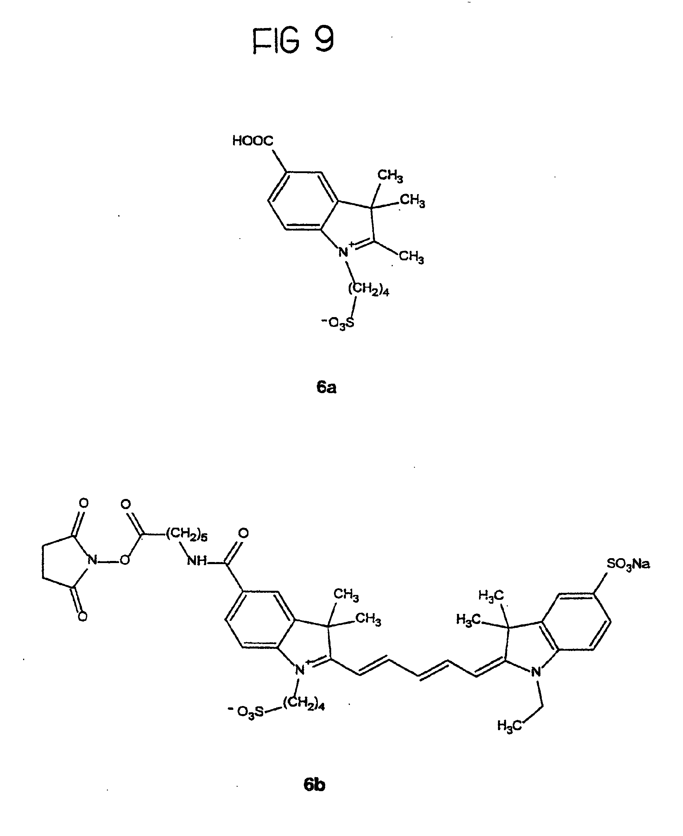

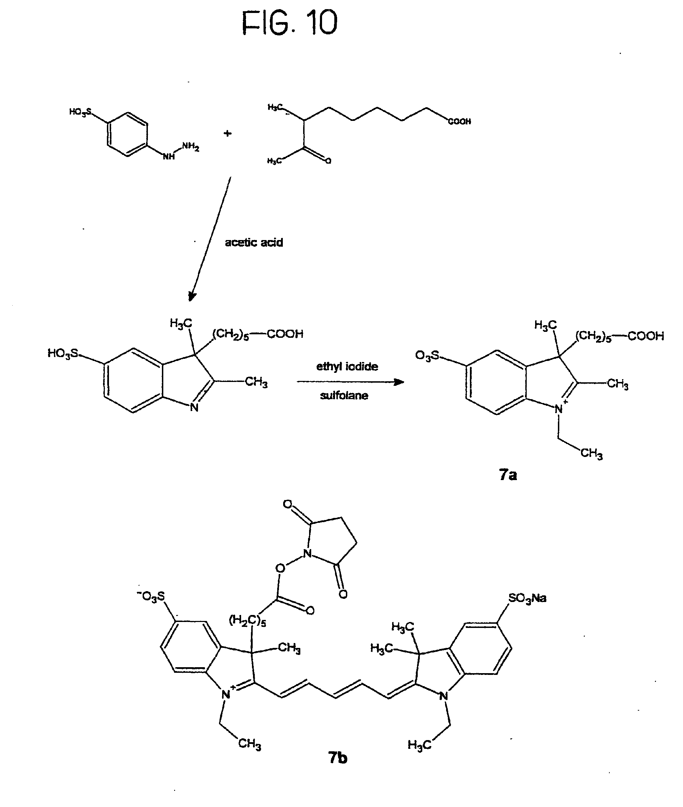

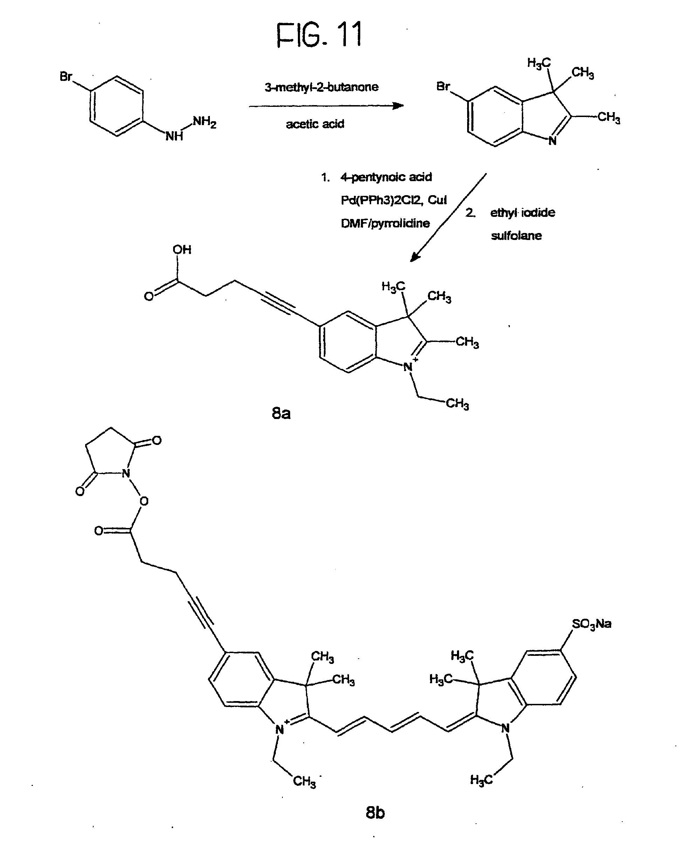

- figs.4-11 show the structures and schemes of reactions relating to the compounds of the following examples.

### Example 1a

A 100 mL, three-neck flask containing 1.00 g of 1-ethyl-2,3,3-trimethylindoleninium iodide (3.17 mmol), 0.62 g of N,N-diphenylformamidine, (3.17 mmol), 12 mL of acetic anhydride and 1 mL of acetyl chloride was heated at 120°C for 45 minutes. The orange red solution was evaporated under reduced pressure and the residue dissolved in dichloromethane The desired product was isolated by precipitation into a large volume of rapidly stirred ether. The product is further purified by flash chromatography, by elution with CH₂Cl₂/CH₃OH (99:1). The pure product has λₘₐₓ in MeOH at 378 nm and no absorption maxima in the visible region. Yield of **1a** was 76%. When the acetyl chloride is omitted a band at 545 nm forms. This band belongs to the symmetric indocarbocyanine dye.

### Example 1b

A 100 mL, three-neck flask containing 1.00 g of 3-(4'-acetoxybutyl)-1,1,2-trimethylbenzo[e]indoleninium iodide (2.44 mmol), 0.48 g of N,N-diphenylformamidine (2.74 mmol), 12 mL of acetic anhydride and 1 mL of acetyl chloride was heated at 120°C for 60 minutes. The orange red solution was evaporated under reduced pressure and the residue dissolved in dichloromethane. The desired product was isolated by precipitation into a large volume of rapidly stirred ether. The product is chromatographically pure, with λₘₐₓ in MeOH at 409 nm and no absorption in the visible region. Yield of **1b** was 90%. When the acetyl chloride is omitted a band at 572 nm forms. This band belongs to the symmetric indodicarbocyanine dye.

### Example 1c

2.50 g of 3-(5'-carboxypentyl)-1,1,2-trimethylbenzo[e]indoleninium 6,8-disulfonate monosodium salt (5.5 mmol), 1.2 g of N,N-diphenylformamidine (6 mmol), 15 mL of acetic anhydride and 2 mL of acetyl chloride in a three-neck 100 mL flask were heated at 120°C for 2 h. The orange red solution was evaporated to a dark gum, dissolved in methanol and re-precipitated into a large volume of ether. This procedure was repeated two more times, until the product was totally purified. Yield of **1c** was 65% with λₘₐₓ(MeOH) at 415 nm and no absorption in the visible region. Without the addition of acetyl chloride a symmetric indocyanine forms with λₘₐₓ(MeOH) at 580 nm.

### Example 2a

A 100 mL, three-neck flask containing 1.00 g of 3-ethyl-2,3,3-trimethylindoleninium iodide (3.17 mmol), 0.82 g of malonaldehyde dianil monohydrochloride (3.17 mmol), 12 mL of acetic anhydride and 1 mL of acetyl chloride was heated at 110°C for 30 minutes. The orange red solution was evaporated under reduced pressure and the residue dissolved in dichloromethane. The desired product was isolated by precipitation into a large volume of rapidly stirred ether. The product is purified by flash chromatography, by eluting with CH₂Cl₂/CHOH, (99:1). The pure product **2a** has a λmax in MeOH at 437 nm and no absorption at longer wavelengths. Yield = 80%.

### Example 2c

2.00 g of 1-ethyl-2,3,3-trimethylindoleninium-5-sulfonate salt (6.53 mmol), 2.20 g of malonaldehyde dianil monohydrochloride (8.50 mmol), 20 mL of acetic anhydride and 5 mL of acetyl chloride were heated at 100°C for 1h. The product was re-precipitated into a large excess of ether or acetone. The crude powder was loaded into a Soxhlet thimble and extracted with ethyl acetate. The purified product **2c** has a λmax in MeOH at 437 nm and no absorption at longer wavelengths. Yield: 81%.

### Example 3a

A flask containing 1.00 g of hemicyanine **1b** (1.68 mmol), 1.24 g of l-ethyl-2,3,3-trimethyl- indoleninium iodide (3.94 mmol), 0.28 g of potassium acetate (2.9 mmol) and 40 mL of acetic anhydride was heated at 135°C for 60 minutes. The red purple solution was cooled to room temperature. Distilled water (50 mL) was added and the resulting mixture was extracted three times with dichloromethane. The organic phase was washed with distilled water, dried with CaCl₂ and evaporated under reduced pressure. The residue was dissolved in a small amount of dichloromethane and precipitated into petroleum ether (b.p. 40-60°C). The resulting purple solid (0.57 g) had a λmax of absorption at 565 nm in MeOH. It was not purified, but it was used as such in the next step (hydrolysis of the acetate protecting group). A 250 mL flask was loaded with the crude cyanine, 40 mL of methanol and 15 mL of concentrated hydrochloric acid. The resulting solution was stirred at room temperature for 24 hours and then evaporated under reduced pressure. Distilled water was added to the residue. The aqueous solution was extracted with dichloromethane, and the extract was washed with distilled water and dried with CaCl₂. The solvent was again evaporated under reduced pressure and then dissolved in a small amount of dichloromethane and then precipitated with a large volume of ether. The crude cyanine alcohol was purified by flash chromatography using a dichloromethane/methanol gradient, from 100% to 90:10. The purified cyanine alcohol was then converted to its phosphoramidite as follows. The cyanine alcohol (0.550 g, 0.91 mmol) was dried in a vacuum oven at 40°C for five hours and then it was loaded into a dry, 100 mL, 3-neck flask. 40 mL of anhydrous acetonitrile were added under argon, followed by 0.17 mL of a 0.5 M solution of tetrazole in acetonitrile and 0.42 mL of 2-cyanoethyl tetraisopropylphosphorodiamidite (1.327 mmol). The solution was stirred under argon for 90 minutes at room temperature. After this time period, it was evaporated in vacuum. The residue was re-dissolved in acetonitrile and precipitated with anhydrous ether, with cooling at 0°C.

The precipitate was washed with dry ether and dried. It was stored at -20°C. Yield of **3a** was 90%.

### Example 4a

0.500 g of hemicyanine **1c** (0.767 mmol), 0.243 g of 1-ethyl-2,3,3-trimethylindoleninium 5-sulfonate (0.767 mmol), and 1 mL of triethylamine were dissolved in 7 mL of acetic anhydride. The mixture was heated under reflux at 120-130°C for two hours. After a few minutes the reaction turned purple red. The mixture was cooled and slowly added to a large volume of rapidly stirred ether. The red precipitate was collected on a filter, washed with ethyl acetate and dried. The product was purified by medium pressure liquid chromatography with acetonitrile/water 50:50 as eluent. The yield of purified product was 73%; its λₘₐₓ in MeOH 570 nm. To prepare the active ester, 50 mg of the acid were dissolved in a microsynthesis vial with 25.6 mg of N,N'-dicyclohexyl carbodiimide (124 mmol), 14.3 mg of N-hydroxysuccinimide (1324 mmol) in 2 mL of dry DMF. The reaction mixture was stirred overnight at about 50°C. The active ester was precipitated with dry ether. The precipitate was collected on a glass filter and washed several times with dry ether. The dried ester **4a** is stored at -20°C. Yield of active ester from the acid: 98%.

### Example 4b

0.500 g of hemicyanine **2c** (1.14 mmol) , 0.85 g of 3-(5'-carboxypentyl)-1,12-trimethyl-benzo[e]-indoleninium-6-sulfonate (2.46 mmol), 0.18 g of potassium acetate (1.82 mmol) were dissolved in 30 mL of acetic anhydride. The reaction mixture was heated under reflux in an oil bath at about 120-130°C for 60 minutes. After a few minutes the color of the mixture turned blue. The mixture was cooled and then was slowly added to a large volume of rapidly stirred ether. The blue precipitate was collected on a filter, washed with ether and dried. The cyanine dye was purified by medium pressure liquid chromatography, using the mixture acetonitrile/water 60:40. The yield of purified acid was 65%; its λₘₐₓ in MeOH is 660 nm. The acid was then converted to its N-hydroxysuccinimide ester. 50 mg (67 µmol) of the acid was dissolved in a microsynthesis vial with 27.6 mg of N,N'-dicyclohexyl carbodiimide(134 µmol), 15.4 mg of N-hydroxysuccinimide(134 µmol) and 2 mL of dry DMF. All glassware and reagents must be anhydrous. The solution was stirred overnight at 50°C. The active ester **4b** was precipitated with ether, collected on a glass filter and washed five times with ether, dried and stored at -20°C. Yield of ester from the acid: 90%.

### Examples 5a and 5b

The same protocol was used for the two conjugates **5a** and **5b.** 2 µmol of 5-allylamino-dUTP were dissolved in 1.2 mL 0.1 M borate buffer pH 8. 10 µmol of active ester **4a** or **4b** dissolved in 300 µmol of DMF were added to the 5-allylamino-dUTP solution and the mixture was stirred in-the dark at room temperature. The reaction was monitored by RP-HPLC (column: Waters Novapack 3.9x150 mm; loop: 20 mL; flow rate: 1 mL/min; program: 15' linear gradient from 100% A to 50% A /50%B, 5' 50%A/50% B, 5' gradient back to 100 A%, with A = water with 0.1% trifluoroacetic acid and B = acetonitrile). The crude conjugate solution was pre-purified by gel filtration chromatography on a 1.5x30 cm, Sephadex G-10 column, with water as eluent. The final purification was by medium pressure liquid chromatography on a Lichroprep RP-18, 20x300 column, with water/acetonitrile 70:30 as eluent. The coupling efficiency was 90% for **5a** and 80% for **5b.** Absorption maxima in MeOH: 570 nm for 5a and 660 nm for **5b**. The conjugates **5a** and **5b** were stored at -20°C.

### Example 6a

10 g of 2,3,3-trimethyl-5-carboxyindolenine were quaternised by heating it in a four fold excess of 4-butanesultone at 120°C for four hours. The brown solution was cooled and slowly added to a large volume of rapidly stirred ether. A light brown solid separated and was dried in vacuum. Yield of **6a** 89%.

### Example 6b

0.5 g of 1-(δ-sulfonatobutyl)-2,3,3-trimethyl-5-carboxyindoleninium, (compound **6a**) (1.47 mmol), 645 mg of hemicyanine **2c** (1.47 mmol), 1 mL of triethylamine and 25 mL of acetic anhydride were heated at reflux for 30 minutes. The resulting blue dye was precipitated into ether. The crude dye was purified by reverse phase medium pressure chromatography on LiChroprep R-18, λmax in MeOH was 646 nm. This compound was activated with triethylchloroformate to its mixed anhydride form. The tert-butyl ester of 6-aminocaproic acid in pyridine was added to the mixed anhydride and the mixture refluxed for 30 minutes. The product was isolated by precipitation with ether. After hydrolysis in dilute hydrochloric acid, the crude acid was purified by RP medium pressure liquid chromatography. The pure acid compound (6a-1) was then converted to its N-hydroxysuccinimide ester, compound **6b,** as previously described.

### Example 7a

Diethyl 2-acetyl-2-methyl-suberate. Ethyl 2-methylacetoacetate (7.9 g, 60 mmol) was added to a stirred solution of 1.44 g of sodium hydride (60 mmol) in 80 mL of toluene over a 30 minutes period. The resulting solution was heated under reflux for two hours, cooled slightly and treated with ethyl 5-bromohexanoate over a 30 minutes period. The resulting mixture was then heated at reflux for twelve hours, cooled, and the solvent evaporated under reduced pressure. The residue, a yellow oil was used as such in the next step.

7-Methyl-8-oxo-nonanoic acid. Hydrolysis of the crude diethyl 2-acetyl-2-methyl-suberate with concentrated hydrochloric acid gave a quantitative yield of 7-methyl-8-oxo-nonanoic acid.

10.0 g of 4-hydrazino-benzene sulfonic acid (53 mmol) and 9.87 g of 7-methyl-8-oxo-nonanoic acid (53 mmol) in 50 mL of acetic acid were heated at reflux for 3 hours. The mixture was cooled for several hours and the precipitated pink solid was collected on a filter and washed with ether. The resulting crystalline solid was dried in a dessicator over solid KOH for 2 days. Finally, the crude indole was quaternised by heating it with a four fold excess of ethyl iodide in sulfolane at 120°C for twelve hours. Precipitation with a large volume of ether yielded compound **7a** as a reddish powder. Yield 68%.

### Compound 7b

The acid **7a,** (1.5 mmol), hemicyanine **2c** (1.5 mmol), 1 mL triethylamine an 30 mL of acetic anhydride were heated at reflux for 30 minutes. The resulting blue dye was precipitated into ether. The crude dye was purified by reverse phase medium pressure chromatography on LiChroprep R-18, λₘₐₓ in MeOH was 665 nm. It was converted into its N-hydroxysuccinimide ester **7b** as previously described.

### Compound 8a

10 g of 5-bromophenylhydrazine (53.5 mmol), 20 mL of 3-methyl-2-butanone and 100 mL of acetic acid were heated at reflux for 4 hours under nitrogen. After removal of the solvent, the red oil was triturated with hexane until it solidified into a pink solid. The crude material was dissolved into dichloromethane and re-precipitated into a large excess of ether. This procedure was repeated twice. The yield of purified indole was 90%. In the next step, the indole (11.43g ; 48.0 mmol), 4.90g of 4-pentynoic acid (50.0 mmol) and 10 mL of pyrrolidine were stirred in 100 mL of N,N-dimethylformamide under nitrogen at room temperature. Bis(triphenylphosphine)palladium(II) chloride, 0.35 g of copper (I) iodide were then added to the stirred mixture. After three hours, the solvent and volatile components were evaporated under reduced pressure. The crude alkynyl indole was quaternised by heating it with a fourfold excess of 1,4-butanesultone at 130°C for 3 h. The overall yield of **8a** from 5-bromo-2,3,3-trimethylindolenine was 65%.

### Compound 8b

The acid **8a** (1.5 mmol), hemicyanine **2c** (1.5 mmol), 1 mL of triethylamine an 30 mL of acetic anhydride were heated at reflux for 30 minutes. The resulting cyanine dye was precipitated into ether. The crude dye was purified by reverse phase medium pressure chromatography on LiChroprep R-18, λₘₐₓ in MeOH was 664 nm. It was converted into its N-hydroxysuccinimide ester **8b** as previously described.

## Claims

1. A process for preparing an asymmetrical indocyanine dye comprising the steps of:
a) reacting a first quaternised indolenine or substituted indolenine with a compound of the formula (II) 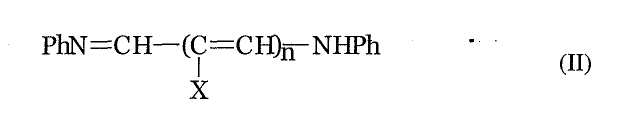 or hydrochloride thereof,
wherein n is 0 or 1
Ph is phenyl or substituted phenyl
X is hydrogen, halogen or alkyl, in a solvent selected from the group consisting of acetic acid, acetic anhydride and mixtures thereof in the presence of acetyl chloride, to obtain an- intermediate hemicyanine, and
b) further reacting said intermediate hemicyanine with a second quaternised indolenine or substituted indolenine different from said first indolenine.

2. A process according to claim 1 wherein the amount of acetyl chloride is from 0.5 to 50% v/v, referred to the acetic acid/acetic anhydride solvent.

3. A process according to claim 1 wherein said first indolenine is less reactive than said second indolenine.

4. A process according to claim 3, wherein said first indolenine bears electron withdrawing groups in the benzene ring.

5. A process according to claim 3 or 4, wherein said first indolenine has additional condensed benzene rings.

6. A process according to any one of claims 3 to 5, wherein said first indolenine has additional condensed benzene rings bearing sulphonic groups or is quaternised with sulfoalkyl or carboxyalkyl groups.

7. A process according to any are of claims 1 to 6, wherein the intermediate hemicyanine from step a) is purified by extraction with a solvent suitable to extract the unreacted compounds of formula (II) without a substantial dissolution of the hemicyanine.

8. A process according to claim 7, wherein said solvent is selected from the group consisting of ethyl acetate and chlorinated organic solvents and mixtures thereof.

9. A process according to claim 8 wherein said solvent is selected from the group consisting of methylene chloride, chloroform, 1, 1, 1-trichloro ethane and mixtures thereof.

10. A process according to claim 1 for preparing an asymmetric indocyanine dye of formula: 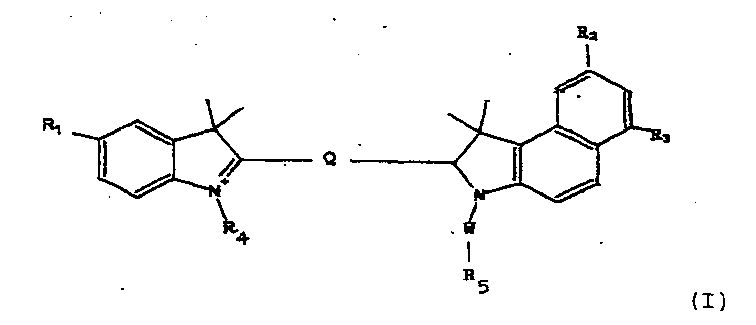 wherein
Q is a methine bridge with 3 or 5 carbon atoms
R₁ is hydrogen, SO₃⁻ or -COOH,
R₂ and R₃ independently are H or SO₃⁻ M⁺
M is a monovalent metal
R₄ is C₁-C₁₂ alkyl, or (CH₂)ₘSO₃⁻, with m = 1 to 12,
W is alkylene having from 1 to 18 carbon atoms, or is (CH₂-CH₂-O)ₙ CH₂-CH₂- wherein n is 1 to 5
and
R₅ is a functional group selected from carboxyl, carbonyl(aldehyde), hydroxyl, amino, sulphydryl, glycidyl, maleimide, imidazolyl carbamoyl, succinimidyl ester, phosphoramidite, isothiocyanate, anhydride, haloacetamido, sulphonyl halide, acid halide, hydrazide, phthalimidyl ester and naphthalimidyl ester.

11. A process according to claim 1 for preparing an asymmetrical indocyanine dye selected from the group consisting of:

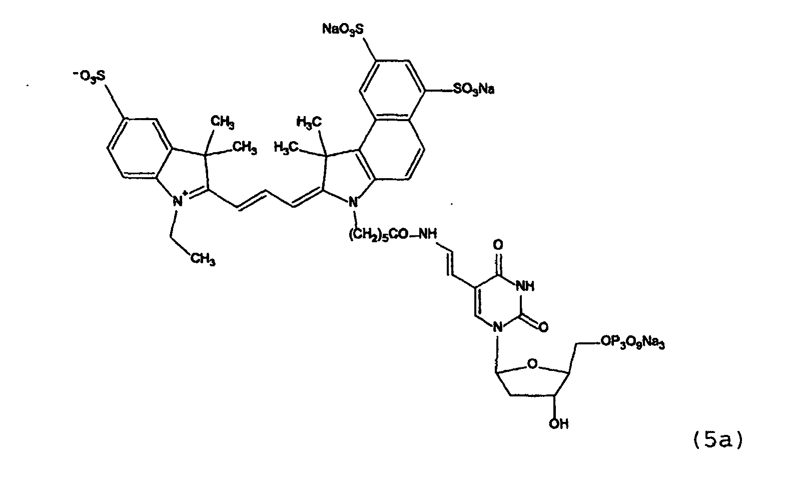

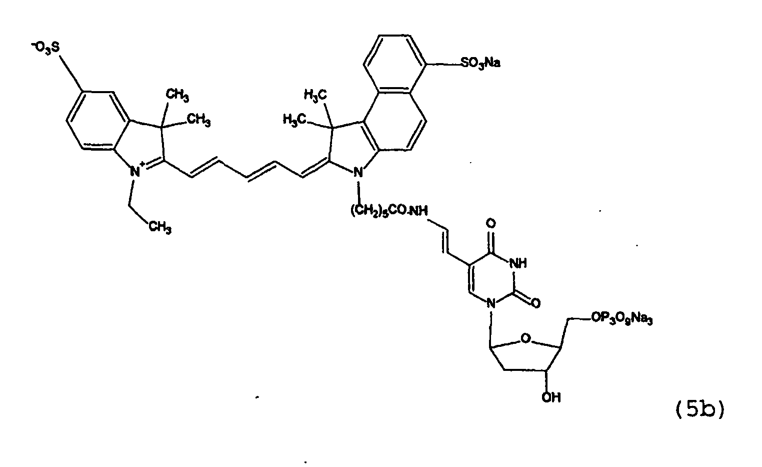

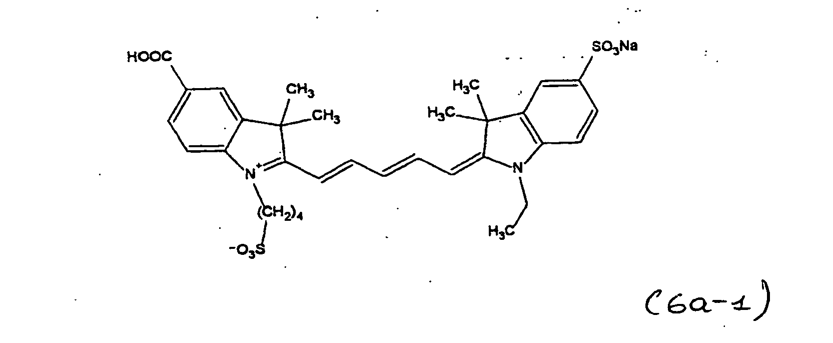

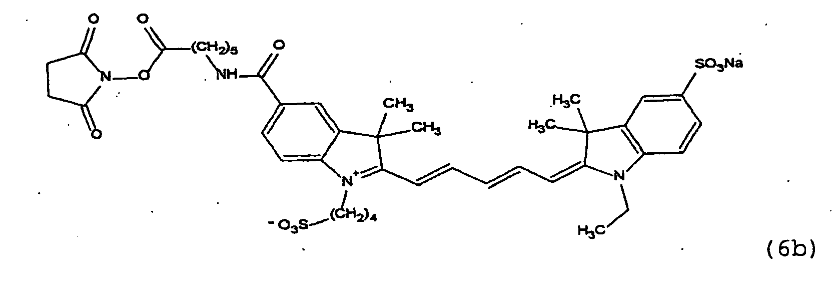

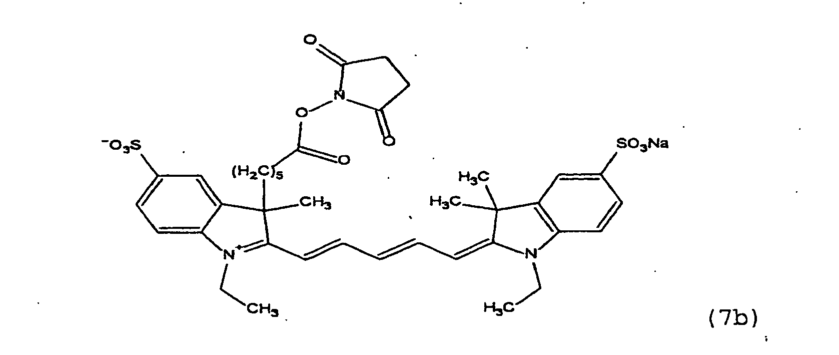

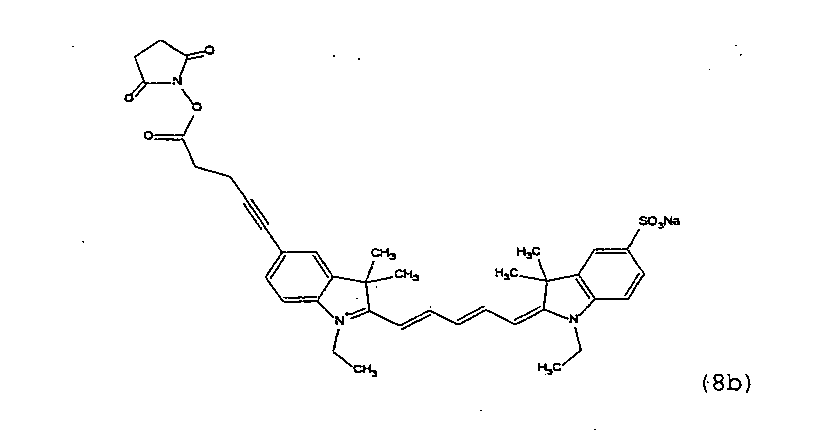

12. A process for preparing a hemicyanine, comprising the step of:
- reacting a quaternised indolenine or substituted indolenine with a confound of the formula (II) 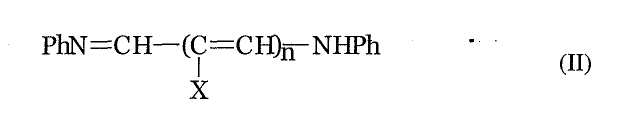 or hydrochloride thereof,
wherein n is 0 or 1
Ph is phenyl or substituted phenyl
X is hydrogen, halogen or alkyl, in a solvent selected from the group consisting of acetic acid, acetic anhydride and mixtures thereof in the presence of acetyl chloride.

13. A process according to claim 1 or 12, wherein x ia chlorine.

14. A process according to claim 2, wherein the amount of acetyl chloride is from 1% to 20% v/v, referred to the acetic acid/acetic anhydride solvent.

15. A process according to claim 10, wherein R₄ is C₁-C₄ alkyl.

16. A process according to claim 10, wherein R₄ is (CH₂)ₘSO₃⁻ with m = 1 to 4.

17. A process according to any one of claims 10, 15 or 16, wherein W is alkylene having from 1 to 5 carbon atoms.

18. An asymmetrical indocyanine having the formula 5a, 5b, 6a-1, 6b, 7b or 8b, as shown in claim 11.

## Patentansprüche

1. Verfahren zur Herstellung eines asymmetrischen Indocyaninfarbstoffes, aufweisend die Schritte:
a) Reagieren lassen eines ersten quatemisierten Indolenins oder substituierten Indolenins mit einer Verbindung der Formel (II) 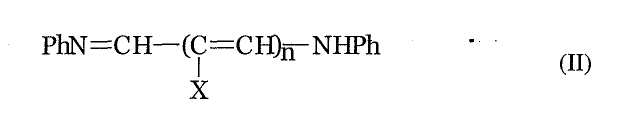 oder seinem Hydrochlorid,
wobei n 0 oder 1 ist,
Ph Phenyl oder substituiertes Phenyl ist,
X Wasserstoff, Halogen oder Alkyl ist,
in einem Lösungsmittel, ausgewählt aus der Gruppe bestehend aus
Essigsäure, Essigsäureanhydrid und Mischungen davon, in der Gegenwart von Acetylchlorid, um ein Hemicyanin-Intermediat zu erhalten, und
b) weiterhin Reagieren lassen dieses Hemicyanin-Intermediats mit einem zweiten quatemisierten Indolenin oder substituierten Indolenin, welches sich von dem ersten Indolenin unterscheidet.

2. Verfahren gemäß Anspruch 1, wobei die Menge an Acetylchlorid von 0,5 bis 50% Vol/Vol ist, bezogen auf das Essigsäure/Essigsäureanhydrid-Lösungsmittel.

3. Verfahren gemäß Anspruch 1, wobei das erste Indolenin weniger reaktiv ist als das zweite Indolenin.

4. Verfahren gemäß Anspruch 3, wobei dieses erste Indolenin elektronenanziehende Gruppen in dem Benzolring trägt.

5. Verfahren gemäß Anspruch 3 oder 4, wobei dieses erste Indolenin zusätzliche kondensierte Benzolringe hat.

6. Verfahren gemäß irgendeinem der Ansprüche 3 bis 5, wobei das erste Indolenin zusätzliche kondensierte Benzolringe hat, die Sulfonsäuregruppen tragen, oder mit Sulfoalkyl- oder Carboxyalkyl-Gruppen quatemisiert ist.

7. Verfahren gemäß irgendeinem der Ansprüche 1 bis 6, wobei das Hemicyanin-Intermediat aus Schritt a) durch Extraktion mit einem Lösungsmittel gereinigt wird, welches dazu geeignet ist, um die unreagierten Verbindungen der Formel (II) zu extrahieren, ohne das Hemicyanin wesentlich aufzulösen.

8. Verfahren gemäß Anspruch 7, wobei das Lösungsmittel ausgewählt wird aus der Gruppe bestehend aus Ethylacetat und chlorierten organischen Lösungsmitteln, sowie Mischungen davon.

9. Verfahren gemäß Anspruch 8, wobei das Lösungsmittel ausgewählt wird aus der Gruppe bestehend aus Methylenchlorid, Chloroform, 1,1,1-Trichlorethan und Mischungen davon.

10. Verfahren gemäß Anspruch 1 zur Herstellung eines asymmetrischen Indocyaninfarbstoffs der Formel: 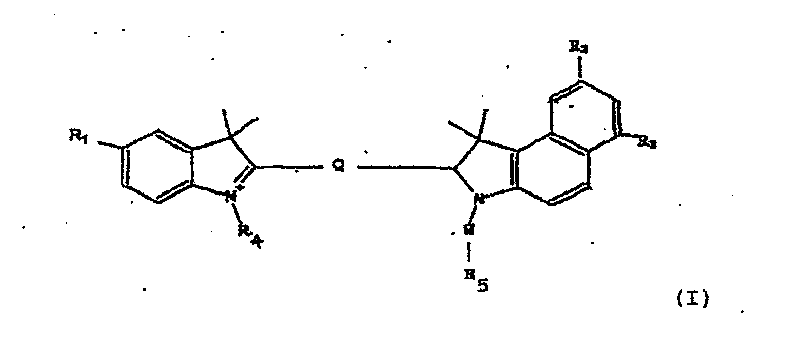 wobei
Q eine Methinbrücke mit 3 oder 5 Kohlenstoffatomen ist,
R₁ Wasserstoff, SO₃⁻ oder -COOH ist,
R₂ und R₃ unabhängig H oder SO₃⁻ M⁺ sind
M ein einwertiges Metall ist
R₄ ein C₁-C₁₂-Alkyl oder (CH₂)ₘSO₃⁻ ist, wobei m = 1 bis 12,
W Alkylen mit von 1 bis 18 Kohlenstoffatomen oder (CH₂-CH₂-O)ₙCH₂-CH₂- ist, wobei n 1 bis 5 ist, und
R₅ eine funktionelle Gruppe ist, ausgewählt aus Carboxyl, Carbonyl (Aldehyd), Hydroxyl, Amino, Sulphydryl, Glycidyl, Maleimid, Imidazolyl, Carbamoyl, Succinimidylester, Phosphoramidit, Isothiocyanat, Anhydrid, Haloacetamido, Sulphonylhalogenid, Säurehalogenid, Hydrazid, Phthalimidylester und Naphthalimidylester.

11. Verfahren gemäß Anspruch 1 zur Herstellung eines asymmetrischen Indocyaninfarbstoffes, ausgewählt aus der Gruppe bestehend aus:

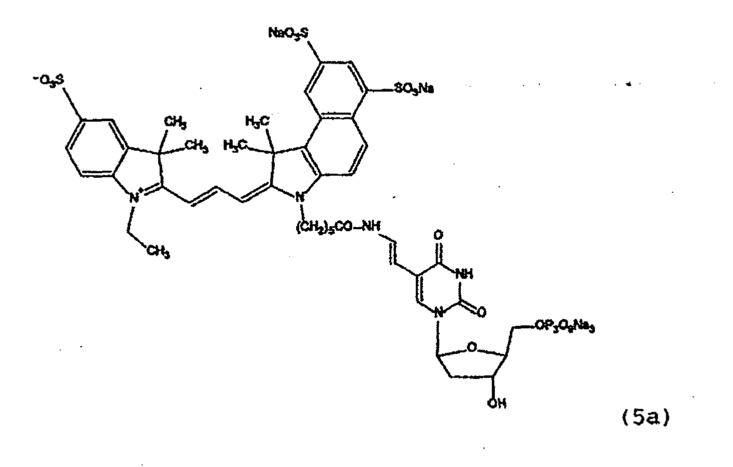

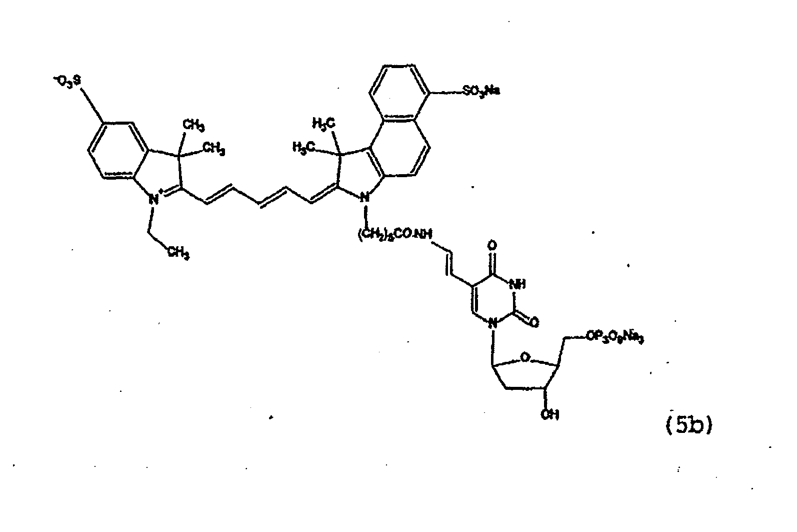

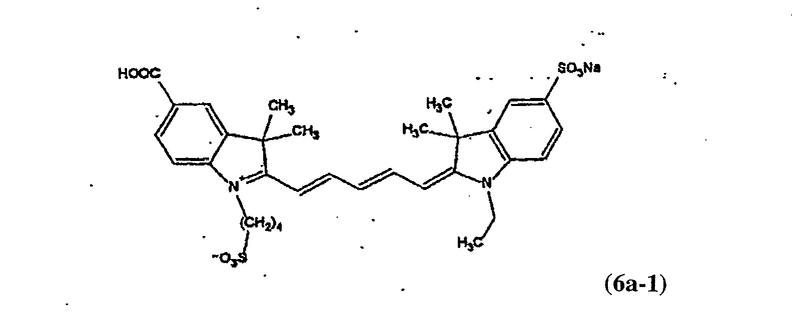

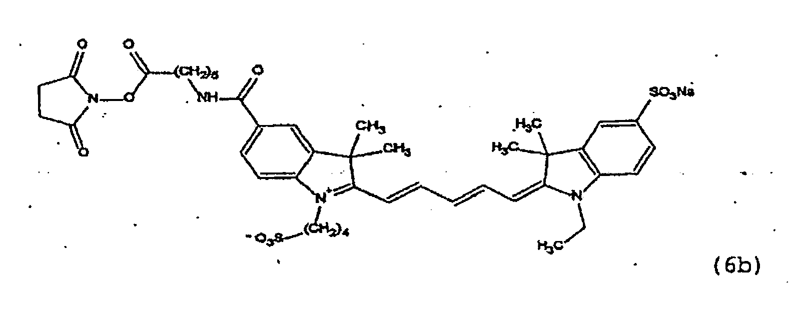

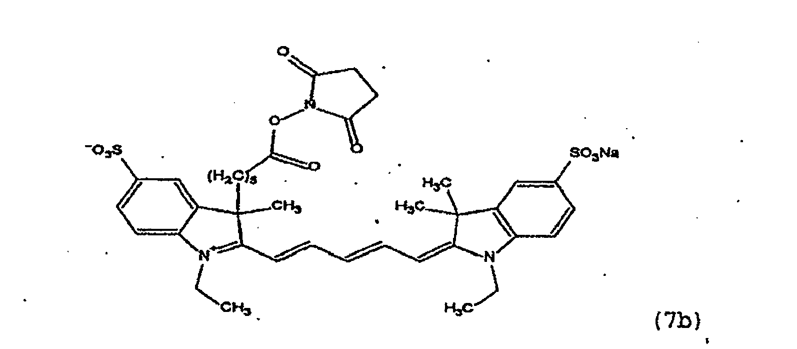

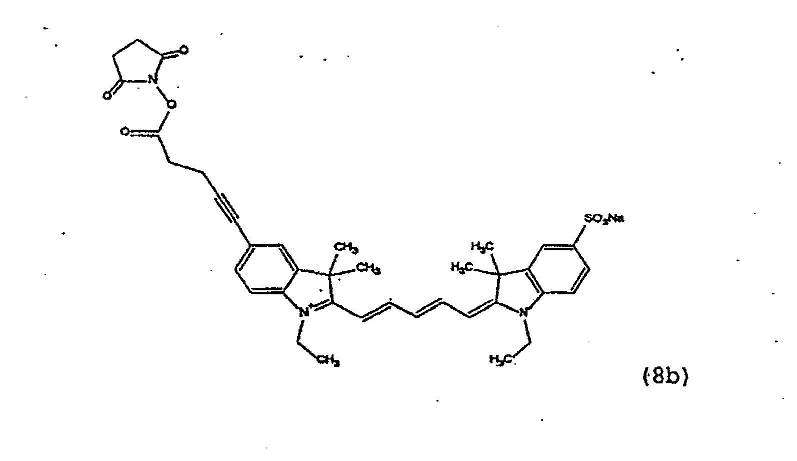

12. Verfahren zur Herstellung eines Hemicyanins, aufweisend den Schritt:
Reagieren lassen eines quatemisierten Indolenins oder substituierten Indolenins mit einer Verbindung der Formel (II) 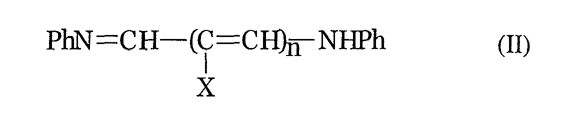
oder seinem Hydrochlorid,
wobei n 0 oder 1 ist,
Ph Phenyl oder substituiertes Phenyl ist,
X Wasserstoff, Halogen oder Alkyl ist,
in einem Lösungsmittel, ausgewählt aus der Gruppe bestehend aus Essigsäure, Essigsäureanhydrid und Mischungen davon, in der Gegenwart von Acetylchlorid.

13. Verfahren gemäß Anspruch 1 bis 12, wobei X Chlor ist.

14. Verfahren gemäß Anspruch 2, wobei die Menge an Acetylchlorid ausgewählt wird aus 1% bis 20% Vol/Vol, bezogen auf das Essigsäure/Essigsäureanhydrid-Lösungsmittel.

15. Verfahren gemäß Anspruch 10, wobei R₄ C₁-C₄-Alkyl ist.

16. Verfahren gemäß Anspruch 10, wobei R₄ (CH₃)ₘSO₃⁻ ist, wobei m = 1 bis 4.

17. Verfahren gemäß irgendeinem der Ansprüche 10, 15 oder 16, wobei W Alkylen mit von 1 bis 5 Kohlenstoffatomen ist.

18. Asymmetrisches Indocyanin mit der Formel 5a, 5b, 6a-1, 6b, 7b oder 8b, wie in Anspruch 11 gezeigt.

## Revendications

1. Procédé de préparation d'un colorant de type indocyanine asymétrique comprenant les étapes consistant à :
a) faire réagir une première indolénine quatemisée ou une indolénine substituée avec un composé de formule (II) 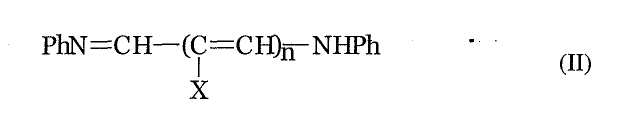 ou avec un chlorhydrate de celui-ci,
dans laquelle n est 0 ou 1,
Ph est un groupe phényle ou phényle substitué,
X est un atome d'hydrogène, un halogène ou un groupe alkyle,
dans un solvant choisi dans le groupe constitué par l'acide acétique, l'anhydride acétique et leurs mélanges en présence de chlorure d'acétyle, pour obtenir une hémicyanine intermédiaire, et
b) faire en outre réagir ladite hémicyanine intermédiaire avec une seconde indolénine quatemisée ou avec une indolénine substituée différente de ladite première indolénine.

2. Procédé selon la revendication 1, dans lequel la quantité de chlorure d'acétyle est de 0,5 à 50 % en volume, par rapport au solvant acide acétique/anhydride acétique.

3. Procédé selon la revendication 1, dans lequel ladite première indolénine est moins réactive que ladite seconde indolénine.

4. Procédé selon la revendication 3, dans lequel ladite première indolénine porte des groupes attracteurs d'électrons sur le noyau benzène.

5. Procédé selon la revendication 3 ou la revendication 4, dans lequel ladite première indolénine comprend des noyaux benzène condensés supplémentaires.

6. Procédé selon l'une quelconque des revendications 3 à 5, dans lequel ladite première indolénine comprend des noyaux benzène condensés supplémentaires portant des groupes sulfoniques ou est quatemisée avec des groupes sulfoalkyle ou carboxyalkyle.

7. Procédé selon l'une quelconque des revendications 1 à 6, dans lequel l'hémicyanine intermédiaire de l'étape a) est purifiée par extraction avec un solvant approprié à l'extraction des composés de formule (II) n'ayant pas réagi sans provoquer une dissolution substantielle de l'hémicyanine.

8. Procédé selon la revendication 7, dans lequel ledit solvant est choisi dans le groupe constitué par l'acétate d'éthyle, les solvants organiques chlorés, et leurs mélanges.

9. Procédé selon la revendication 8, dans lequel ledit solvant est choisi dans le groupe constitué par le chlorure de méthylène, le chloroforme, le 1,1,1-trichloroéthane et leurs mélanges.

10. Procédé selon la revendication 1, pour la préparation d'un colorant de type indocyanine asymétrique de formule : 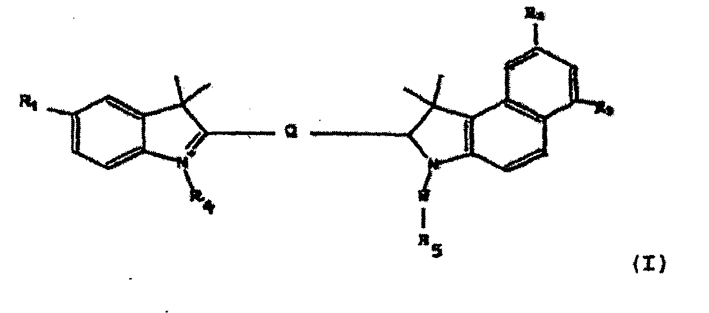 dans laquelle
Q est un pont méthine comportant 3 à 5 atomes de carbone,
R₁ est un atome d'hydrogène, SO₃⁻ ou -COOH,
R₂ et R₃ sont indépendamment H ou SO₃⁻ M⁺,
M est un métal monovalent,
R₄ est un groupe alkyle en C₁-C₁₂ ou (CH₂)ₘSO₃⁻, avec m = 1 à 12,
W est un groupe alkylène comportant 1 à 18 atomes de carbone, ou est (CH₂-CH₂-O)ₙ-CH₂-CH₂- où n est 1 à 5, et
R₅ est un groupe fonctionnel choisi parmi les groupes carboxyle, carbonyl(aldéhyde), hydroxyle, amino, sulfydryle, glycidyle, maléimide, imidazolylcarbamoyle, succinimidylester, phosphoramidite, isothiocyanate, anhydride, halogénoacétamido, halogénure de sulfonyle, halogénure d'acide, hydrazide, phtalimidylester et naphtalimidylester.

11. Procédé selon la revendication 1, pour la préparation d'un colorant de type indocyanine asymétrique choisi dans le groupe constitué par :

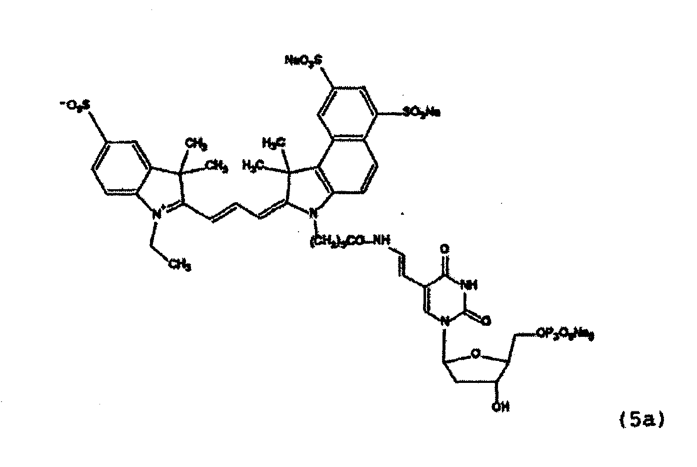

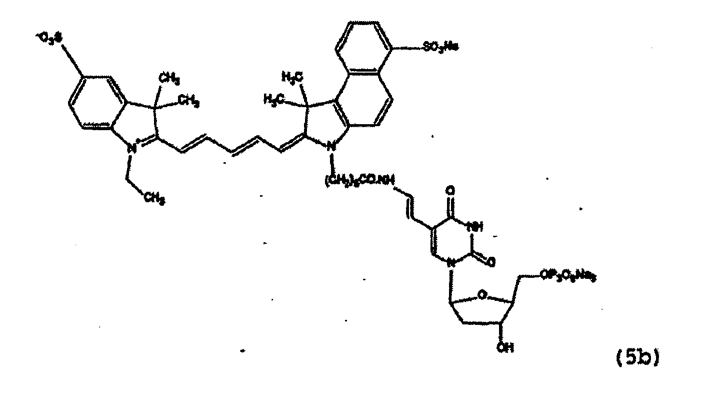

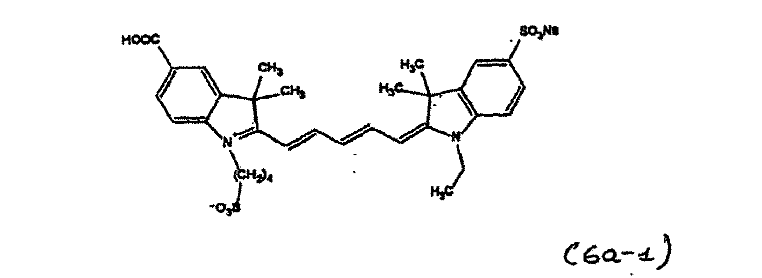

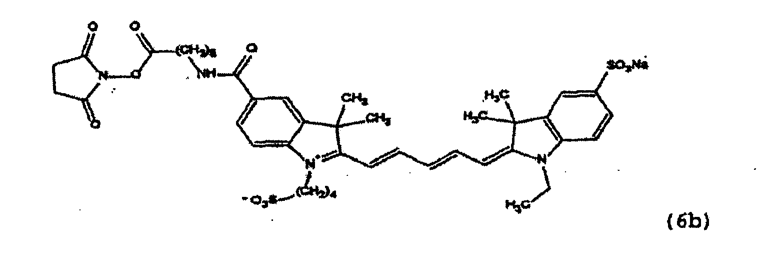

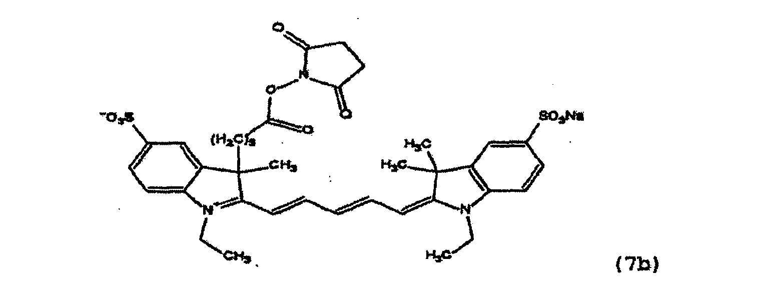

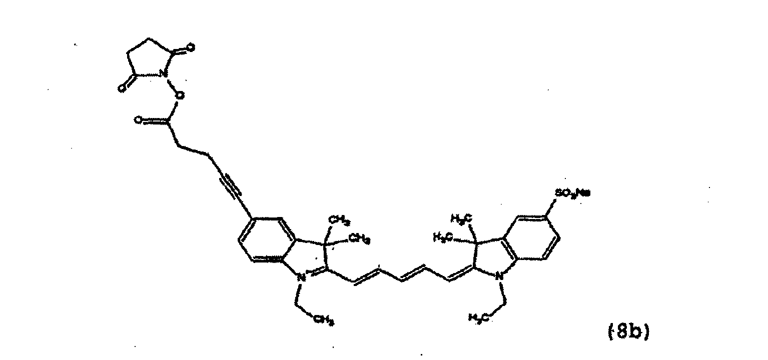

12. Procédé de préparation d'une hémicyanine, comprenant l'étape consistant à :
- faire réagir une indolénine quaternisée ou une indolénine substituée avec un composé de formule (II) 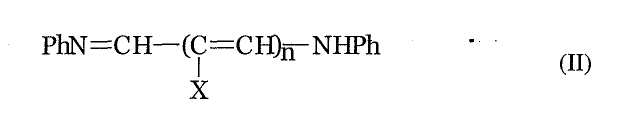
ou avec un chlorhydrate de celui-ci,
dans laquelle n est 0 ou 1,
Ph est un groupe phényle ou phényle substitué,
X est un atome d'hydrogène, un halogène ou un groupe alkyle,
dans un solvant choisi dans le groupe constitué par l'acide acétique, l'anhydride acétique et leurs mélanges en présence de chlorure d'acétyle.

13. Procédé selon la revendication 1 ou la revendication 12, dans lequel X est un atome de chlore.

14. Procédé selon la revendication 2, dans lequel la quantité de chlorure d'acétyle est de 1 à 20 % en volume, par rapport au solvant acide acétique/anhydride acétique.

15. Procédé selon la revendication 10, dans lequel R₄ est un groupe alkyle en C₁-C₄.

16. Procédé selon la revendication 10, dans lequel R₄ est (CH₂)ₘSO₃⁻, avec m = 1 à 4.

17. Procédé selon l'une quelconque des revendications 10, 15 ou 16, dans lequel W est un groupe alkylène comportant 1 à 5 atomes de carbone.

18. Indocyanine asymétrique répondant à la formule 5a, 5b, 6a-1, 6b, 7b ou 8b, représentée dans la revendication 11.
